# EUROPÄISCHE PATENTANMELDUNG

(11) **EP 3 425 099 A1**
(43) Veröffentlichungstag der Anmeldung: **09.01.2019**
(21) Anmeldenummer: 17179327.6
(22) Anmeldetag: 03.07.2017
(51) Int. Cl.: D04H 1/54, D04H 1/56, D04H 1/62

(54) **MELTBLOWN-VLIESSTOFF MIT VERBESSERTER STAPELBARKEIT UND LAGERBARKEIT**

(71) Anmelder: Nickel, Axel, 30966 Hemmingen (DE); Jording, Norbert, 32257 Bünde (DE)
(72) Erfinder: Nickel, Axel, 30966 Hemmingen (DE); Jording, Norbert, 32257 Bünde (DE)
(74) Vertreter: Henkel, Breuer & Partner

(57) **Zusammenfassung**

Die vorliegende Erfindung betrifft einen Meltblown-Vliesstoff in Form eines flächigen Gebildes, in dem wenigstens ein in Dickenrichtung des Meltblown-Vliesstoffs angeordneter Abstandshalter vorgesehen ist, welcher i) auf der Oberseite und/oder Unterseite des Vliesstoffs angeordnet ist oder ii) sich zumindest teilweise durch den Vliesstoffs erstreckt und in der Dickenrichtung gesehen zumindest ein Maß aufweist, dass die unerwünschte Dickenminderung des Meltblown-Vliesstoffs bei Druckbeaufschlagung verhindert oder 90% bis 100% der Dicke des Meltblown-Vliesstoffs (10) aufweist oder über die Oberseite und/oder die Unterseite des Vliesstoffs hinausragt.

## Beschreibung

Die vorliegende Erfindung betrifft einen Meltblown-Vliesstoff mit verbesserter Stapelbarkeit und Lagerbarkeit und insbesondere einen voluminösen Meltblown-Vliesstoff mit verbesserter Stapelbarkeit und Lagerbarkeit. Des Weiteren betrifft die vorliegende Erfindung ein Verfahren zum Herstellen eines solchen Meltblown-Vliesstoffs.

Üblicherweise erfolgt die Herstellung von Filzen und Vliesen aus Stapelfasern und/oder Endlosfilamenten mittels bekannter mechanischer oder aerodynamischer Verfahren. Ein bekanntes aerodynamisches Verfahren ist das Meltblown-Verfahren nach dem Exxon-Prinzip, wie dieses zum Beispiel in der US 3,755,527 beschrieben wird. Bei diesem Verfahren wird ein niedrigviskoses Polymer durch Kapillaren, die sich an einer Düsenspitze befinden, extrudiert. Die sich bildenden Polymertropfen werden dann von zwei Seiten mit einer als Blasluft bezeichneten, eine hohe Temperatur und Geschwindigkeit aufweisenden, Luftströmung beaufschlagt, infolge dessen die Polymertropfen zu einem Polymerfreistrahl in Form von feinen Filamenten ausgezogen werden. Durch die im spitzen Winkel auf die Polymertropfen aufeinandertreffenden Luftströmungen wird in dem Polymerfreistrahl zudem ein Schwingungsvorgang im dann vorliegenden Freistrahl induziert, infolge dessen es zu hochfrequenten Vorgängen kommt, welche die Polymerstränge über die Geschwindigkeit der Blasluft hinaus beschleunigen. Dadurch werden die Polymerstränge zusätzlich verstreckt, so dass die nach Ablegen der Filamente auf einem Träger und nach Abkühlen erhaltenen Filamente einen Durchmesser und eine Feinheit im einstelligen Mikrometerbereich oder sogar darunter aufweisen können. Die so hergestellten Meltblown-Vliesstoffe bzw. Schmelz-Blas-Vliesstoffe werden für unterschiedliche Anwendungen verwendet, wie zum Beispiel für Barrierefunktionen im Hygienebereich. Für diese Anwendungen werden die Filamente auf dem Träger als flacher, zweidimensionaler Vliesstoff abgelegt.

Ein weiteres bekanntes Meltblown-Verfahren ist von der Firma Biax Fiberfilm Corp. entwickelt worden und zum Beispiel in der US 4,380,570 beschrieben worden.

Es können auch voluminöse, dreidimensionale Meltblown-Vliesstoffe hergestellt werden, indem die gebildeten Filamente zwischen zwei Saugtrommeln bzw. Doppeltrommeln abgelegt werden, wie dies beispielsweise in der DE 17 85 712 C3 und in der US 4,375,446 beschrieben wird. Diese voluminösen Meltblown-Vliesstoffe können zum Beispiel als Ölabsorber oder als akustische Dämpfungsmaterialien eingesetzt werden. Allerdings weisen diese voluminösen Meltblown-Vliesstoffe den Nachteil auf, dass sie sehr duktil sind und sich durch eine schlechte Relaxation auszeichnen, was nach Druckbelastung zu einem Verlust an Volumen führt. Dadurch sind diese voluminösen Meltblown-Vliesstoffe ohne unerwünschte Verformung nur sehr bedingt stapelbar. Daher müssen diese aufwendig gelagert werden, um eine unerwünschte Verformung infolge von bspw. Stapeln zu vermeiden.

Aufgabe der vorliegenden Erfindung ist es daher, einen Meltblown-Vliesstoff und insbesondere einen voluminösen Meltblown-Vliesstoff bereitzustellen, welcher leicht stapelbar ist, ohne dass es dadurch zu unerwünschten Verformungen kommt.

Erfindungsgemäß wird diese Aufgabe gelöst durch einen Meltblown-Vliesstoff in Form eines flächigen Gebildes, in dem wenigstens ein in Dickenrichtung des Meltblown-Vliesstoffs angeordneter Abstandshalter vorgesehen ist, welcher i) auf der Oberseite und/oder Unterseite des Vliesstoffs angeordnet ist oder ii) sich zumindest teilweise durch den Vliesstoffs erstreckt und in der Dickenrichtung gesehen zumindest ein Maß aufweist, dass die unerwünschte Dickenminderung des Meltblown-Vliesstoffs bei Druckbeaufschlagung verhindert oder 90% bis 100% der Dicke des Meltblown-Vliesstoffs aufweist oder über die Oberseite und/oder die Unterseite des Vliesstoffs hinausragt.

Indem der Meltblown-Vliesstoff wenigstens einen und vorzugsweise mehrere in Dickenrichtung des Meltblown-Vliesstoffs angeordnete Abstandshalter aufweist, welche i) auf der Oberseite und/oder Unterseite des Vliesstoffs angeordnet sind oder ii) sich zumindest teilweise durch den Vliesstoff erstrecken und in der Dickenrichtung gesehen zumindest ein Maß aufweisen, dass die unerwünschte Dickenminderung des Meltblown-Vliesstoffs bei Druckbeaufschlagung verhindert oder 90% bis 100% der Dicke des Meltblown-Vliesstoffs aufweist oder über die Oberseite und/oder die Unterseite des Vliesstoffs hinausragt, können verschiedene Lagen des Vliesstoffs einfach übereinander gestapelt werden, ohne dass dadurch eine Verformung und insbesondere Kompression des Vliesstoffs auftritt, da sich die verschiedenen Lagen jeweils mit ihren Abstandshalter berühren und durch diese gegenseitig so beabstandet werden, dass die oberen Lagen durch ihr Gewicht nicht die unteren Lagen komprimieren. Dadurch wird eine einfache Lagerbarkeit des Meltblown-Vliesstoffs erreicht.

Unter einem Meltblown-Vliesstoff wird im Sinne der vorliegenden Erfindung ein mit einem der bekannten Meltblown-Verfahren hergestellter Vliesstoff verstanden, unabhängig davon, ob es ein flächiger 2-dimensionaler Vliesstoff oder ein voluminöser Vliesstoff ist. Verfahren zur Herstellung solcher Meltblown-Vliesstoffe sind beispielsweise in der US 4,118,531, in der US 4,375,446, in der US 4,380,570 und in der DE 17 85 712 C3 beschrieben.

Zudem wird im Sinne der vorliegenden Erfindung unter einem flächigen Gebilde ein dreidimensionales Gebilde verstanden, dessen Dicke beträchtlich weniger beträgt als die durch dessen Länge und Breite definierte Fläche und insbesondere ein dreidimensionales Gebilde, bei dem die Dicke maximal 20% der durch dessen Länge und Breite definierten Fläche beträgt.

Wie vorstehend dargelegt, weist der Meltblown-Vliesstoff in Form eines flächigen Gebildes erfindungsgemäß wenigstens einen und bevorzugt mehrere in Dickenrichtung des Meltblown-Vliesstoffs angeordnete Abstandshalter auf, welche i) auf der Oberseite und/oder Unterseite des Vliesstoffs angeordnet sind oder ii) sich zumindest teilweise durch den Vliesstoffs erstrecken und in der Dickenrichtung gesehen zumindest ein Maß aufweisen, dass die unerwünschte Dickenminderung des Meltblown-Vliesstoffs bei Druckbeaufschlagung verhindert oder 90% bis 100% der Dicke des Meltblown-Vliesstoffs aufweist oder über die Oberseite und/oder die Unterseite des Vliesstoffs hinausragt.

Gemäß einer ersten besonders bevorzugten Ausführungsform der vorliegenden Erfindung ist der wenigstens eine Abstandshalter eine durch Anlegen von mechanischem Druck erzeugte Vertiefung, deren Seitenflächen und Unterseite durch komprimierten Vliesstoff begrenzt wird, wobei die durch komprimierten Vliesstoff begrenzte Unterseite der Vertiefung in der Dickenrichtung gesehen zwischen 0% und bis zu 10% der Dicke des Meltblown-Vliesstoffs unterhalb der Unterseite des Meltblown-Vliesstoffs liegt oder über die Unterseite des Vliesstoffs hinausragt. Bei dieser Ausführungsform werden in den Vliesstoff Abstandshalter aus komprimiertem Vliesstoff eingebracht, welche einfach durch Aufbringen eines die Form der einzubringenden Vertiefung aufweisenden Stempels und Eindrücken des Stempels in den Vliesstoff ausgebildet werden können. Aufgrund der sehr viel höheren mechanischen Stabilität von komprimiertem Vliesstoff im Vergleich zu dem nicht-komprimierten Vliesstoff, können diese Abstandshalter ohne Verformung den Druck von darüber liegenden Vliesstoffschichten aufnehmen und erlauben so eine Stapelbarkeit des Meltblown-Vliesstoffs.

Beispielsweise kann die Vertiefung eine quaderförmige oder zylindrische Querschnittsform aufweisen.

Gute Ergebnisse werden bei dieser Ausführungsform insbesondere erhalten, wenn die Vertiefung eine Breite von einem 0,1-fachen bis 5-fachen, besonders bevorzugt von dem 0,25-fachen bis 2-fachen und ganz besonders bevorzugt von dem 0,3-fachen bis 0,7-fachen der Dicke des Vliesstoffs aufweist. Bei einer bevorzugten Dicke des Vliesstoffs von 10 bis 30 mm, beträgt die Breite der Vertiefung höchst bevorzugt 5 bis 10 mm. Unter Breite der Vertiefung wird die längste Ausdehnung der Vertiefung im Querschnitt verstanden, also im Falle einer zylindrischen Querschnittsform der Vertiefung der Durchmesser.

Um eine gute Stapelbarkeit ohne Gefahr von Verformung zu ergeben, wird es in Weiterbildung des Erfindungsgedankens vorgeschlagen, in dem Meltblown-Vliesstoff mehrere, zumindest im Wesentlichen gleichmäßig über die Oberfläche des Meltblown-Vliesstoffs angeordnete Abstandshalter in Form von an deren Seitenflächen und Unterseite durch komprimierten Vliesstoff begrenzten Vertiefungen vorzusehen. Vorzugsweise weisen diese Vertiefungen voneinander einen in der Vliesstoffebene gesehenen Abstand von 50 bis 500 mm, bevorzugt von 100 bis 300 mm und besonders bevorzugt von 150 bis 250 mm auf. So wird ein guter Kompromiss zwischen ausreichend hoher Stapelbarkeit und gleichzeitig möglichst geringer Anzahl an Abstandshaltern erreicht.

Gemäß einer zu der vorgenannten Ausführungsform alternativen, aber gleichermaßen bevorzugten zweiten besonders bevorzugten Ausführungsform der vorliegenden Erfindung ist der wenigstens eine in der Dickenrichtung des Meltblown-Vliesstoffs angeordnete Abstandshalter ein aus einem anderen als Vliesstoff bestehenden Material geformtes Element.

Vorzugsweise ist das von dem Vliesstoff verschiedene Material ein formstabiles Material, wie beispielsweise eines, welches aus der aus Metallen, Kunststoffen, Keramiken, Holz, Glas und beliebigen Kombinationen von zwei oder mehr der vorgenannten Materialien bestehenden Gruppe ausgewählt ist.

Besonders bevorzugt besteht das von dem Vliesstoff verschiedene Material aus einem verwandten oder kompatiblen Rohstoff, so dass ein stoffliches Recycling des Vliesstoffs einschließlich der Abstandshalters möglich ist.

Dabei kann der wenigstens eine Abstandshalter bei dieser Ausführungsform auf die Oberseite und/oder Unterseite des Vliesstoffs aufgebracht und vorzugsweise mit Klebstoff, mit einem Verbindungselement, durch thermisches Verschweißen oder durch mechanisches Pressen fixiert sein.

Alternativ dazu kann sich der wenigstens eine Abstandshalter durch eine zuvor druckfrei in den Vliesstoff eingebrachte Aussparung erstrecken und in der Dickenrichtung gesehen zumindest ein Maß aufweisen, dass die unerwünschte Dickenminderung des Meltblown-Vliesstoffs bei Druckbeaufschlagung verhindert oder 90% bis 100% der Dicke des Meltblown-Vliesstoffs aufweist oder über die Oberseite und/oder die Unterseite des Vliesstoffs hinausragt.

Eine einfache Herstellbarkeit ergibt sich insbesondere in dem Fall, dass der wenigstens eine Abstandshalter eine zylindrische, quaderförmige oder pilzförmige Form aufweist.

Um eine gute Stapelbarkeit ohne Gefahr der Verformung zu ergeben, wird es in Weiterbildung des Erfindungsgedankens vorgeschlagen, in dem Meltblown-Vliesstoff mehrere, zumindest im Wesentlichen gleichmäßig über die Oberfläche des Meltblown-Vliesstoffs angeordnete Abstandshalter vorzusehen. Vorzugsweise weisen diese Abstandshalter voneinander einen in der Vliesstoffebene gesehenen Abstand von 50 bis 500 mm, bevorzugt von 100 bis 300 mm und besonders bevorzugt von 150 bis 250 mm auf.

Gemäß einer zu der vorgenannten Ausführungsform alternativen, aber gleichermaßen bevorzugten dritten besonders bevorzugten Ausführungsform der vorliegenden Erfindung ist als Abstandshalter bereichsweise zusätzlicher Vliesstoff auf den Vliesstoff aufgebracht, so dass die Gesamtdicke in diesem/diesen Bereich(en) des Meltblown-Vliesstoffs größer als die des übrigen Vliesstoffs ist.

Dabei kann der zusätzliche Vliesstoff auf dem Vliesstoff durch Klebstoff, thermisches Verschweißen oder mechanisches Pressen fixiert sein.

In Weiterbildung des Erfindungsgedankens wird es vorgeschlagen, dass der zusätzliche Vliesstoff als Abstandshalter auf zumindest einen Teil des Randbereichs des Vliesstoffs aufgebracht ist, so dass die Gesamtdicke in diesem Randbereich größer als die des übrigen Vliesstoffs ist.

Dies kann beispielsweise einfach dadurch erreicht werden, dass der zusätzliche Vliesstoff durch Umklappen des Meltblown-Vliesstoffs auf zumindest einen Teil des Randbereichs des Meltblown-Vliesstoffs aufgebracht, ggf. komprimiert wird und vorzugsweise durch Klebstoff, thermisches Verschweißen oder mechanisches Pressen auf dem Randbereich des Meltblown-Vliesstoffs fixiert wird.

Grundsätzlich ist die vorliegende Erfindung bezüglich des Flächengewichts des Meltblown-Vliesstoffs nicht besonders limitiert. Vorzugsweise weist der Meltblown-Vliesstoff ein Flächengewicht von 30 bis 600 g/m², besonders bevorzugt von 100 bis 400 g/m² und ganz besonders bevorzugt von 250 bis 350 g/m², wie etwa von 350 g/m², auf.

Wie vorstehend dargelegt, kann es sich bei dem erfindungsgemäßen Meltblown-Vliesstoff insbesondere um einen voluminösen Meltblown-Vliesstoff handeln. Vorzugsweise ist der Meltblown-Vliesstoff ein voluminöser Meltblown-Vliesstoff mit einer Dichte von 5 bis 50 kg/m³, bevorzugt von 8 bis 25 kg/m³ und besonders bevorzugt von 10 bis 20 kg/m³.

Auch bezüglich der chemischen Natur der Filamente ist der erfindungsgemäße Meltblown-Vliesstoff nicht besonders limitiert. Grundsätzlich können die Filamente des Meltblown-Vliesstoffs aus jedem Polymer bestehen, welches einen zur Extrusion geeigneten Schmelzpunkt und eine im Schmelzzustand für das Meltblown-Verfahren hinreichend niedrige Viskosität aufweist, wie beispielsweise aus Polyolefinen, Polyamiden, Polyestern, Polyphenylensulfiden, Polytetrafluorethylen oder einem Polyetheretherketon. Besonders geeignet haben sich insbesondere Filamente erwiesen, welche aus einem aus der aus Polyethylenterephthalat, Polybutylenterephthalat, Polypropylen und Polyethylen bestehenden Gruppe ausgewähltem Polymer zusammengesetzt sind. Ganz besonders bevorzugt sind die Filamente des Meltblown-Vliesstoffs gemäß der vorliegenden Erfindung aus isotaktischem Polypropylen zusammengesetzt.

Der Meltblown-Vliesstoff kann mit jedem der bekannten Meltblown-Verfahren hergestellt werden, wie beispielsweise mit einem in der US 4,118,531, in der US 4,375,446, in der US 4,380,570 oder in der DE 17 85 712 C3 beschriebenen Verfahren. Grundsätzlich wird bei einem Meltblown-Verfahren Vliesstoff hergestellt, indem durch eine Düse extrudierte Polymerschmelze außenseitig mit strömender Luft beaufschlagt und verstreckt wird, bevor die dadurch ausgebildeten Filamente auf einem Träger abgelegt und abgekühlt werden. Im Falle der Ausbildung eines voluminösen Meltblown-Vliesstoffs ist der Träger bevorzugt eine Doppel-Saugtrommel.

Insgesamt ermöglicht es die vorliegende Erfindung, einen ohne Verformung stapelbaren und daher leicht lagerbaren Meltblown-Vliesstoff herzustellen.

Nachfolgend wird die vorliegende Erfindung unter Bezugnahme auf diese erläuternde, diese aber nicht einschränkenden Figuren beschrieben.

Dabei zeigen:
- Fig. 1: schematisch einen Meltblown-Vliesstoff ohne Abstandshalter gemäß dem Stand der Technik.
- Fig. 2: schematisch einen Meltblown-Vliesstoff gemäß der Fig. 1, welcher sich durch aufgebrachten mechanischen Druck irrreversibel verformt wurde.
- Fig. 3: schematisch einen Meltblown-Vliesstoff mit in der Dickenrichtung des Meltblown-Vliesstoffs angeordneten Abstandshaltern gemäß einem ersten Ausführungsbeispiel der vorliegenden Erfindung.
- Fig. 4: schematisch einen Meltblown-Vliesstoff mit in der Dickenrichtung des Meltblown-Vliesstoffs angeordneten Abstandshaltern gemäß einem zweiten Ausführungsbeispiel der vorliegenden Erfindung.
- Fig. 5: schematisch einen Meltblown-Vliesstoff mit in der Dickenrichtung des Meltblown-Vliesstoffs angeordneten Abstandshaltern gemäß einem dritten Ausführungsbeispiel der vorliegenden Erfindung.

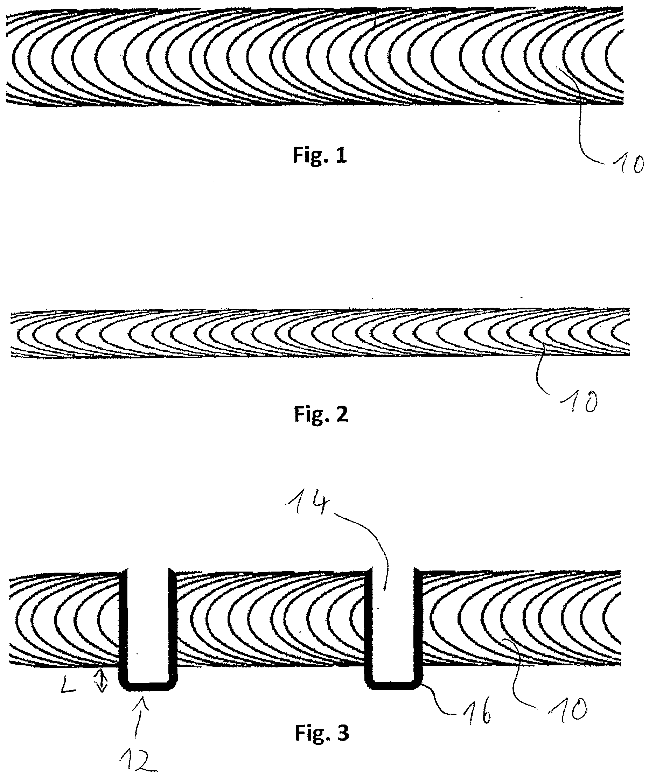

Die Fig. 1 zeigt schematisch einen Meltblown-Vliesstoff 10 ohne Abstandshalter gemäß dem Stand der Technik, der gemäß dem in der DE 17 85 712 C3 beschriebenen Verfahren hergestellt worden ist. Man erkennt die C-förmige Struktur innerhalb des Meltblown-Vliesstoffs 10, die sich aufgrund des bei dem in der DE 17 85 712 beschriebenen Herstellungsverfahren hochfrequenten Hin- und Herschwingens des Filamentvorhangs ergibt.

Wird ein Meltblown-Vliesstoff 10 gemäß dem Stand der Technik mit Druck beaufschlagt, welcher sich beispielsweise daraus ergibt, dass der Meltblown-Vliesstoff 10 mit mehreren Lagen des Meltblown-Vliesstoffs 10 gestapelt wird, wird der Meltblown-Vliesstoff 10 irreversibel zusammengedrückt und bleibt verformt, wie dies in der Fig. 2 gezeigt ist.

Um die Druckbelastbarkeit und damit die Stapelbarkeit des Meltblown-Vliesstoffs 10 zu erhöhen, wird es erfindungsgemäß vorgeschlagen, in dem Meltblown-Vliesstoff 10 wenigstens einen und vorzugsweise mehrere in der Dickenrichtung des Meltblown-Vliesstoffs 10 angeordnete Abstandshalter 12 vorzusehen. Die in der Fig. 3 gezeigten Abstandshalter 12 sind durch Aufbringen von mechanischem Druck erzeugte Vertiefungen 14, deren Seitenflächen und Unterseite durch komprimierten Vliesstoff 16 begrenzt werden, wobei die durch den komprimierten Vliesstoff 16 begrenzte Unterseite der Vertiefung 14 in der Dickenrichtung gesehen über die Unterseite des Vliesstoffs 10 um die Entfernung L hinausragt. Aufgrund der sehr viel höheren mechanischen Stabilität von komprimiertem Vliesstoff 16 im Vergleich zu dem nicht-komprimierten Vliesstoff 10, können diese Abstandshalter 12 ohne Verformung den Druck von darüber liegenden Vliesstoffschichten aufnehmen und erlauben so eine Stapelbarkeit des Meltblown-Vliesstoffs 10.

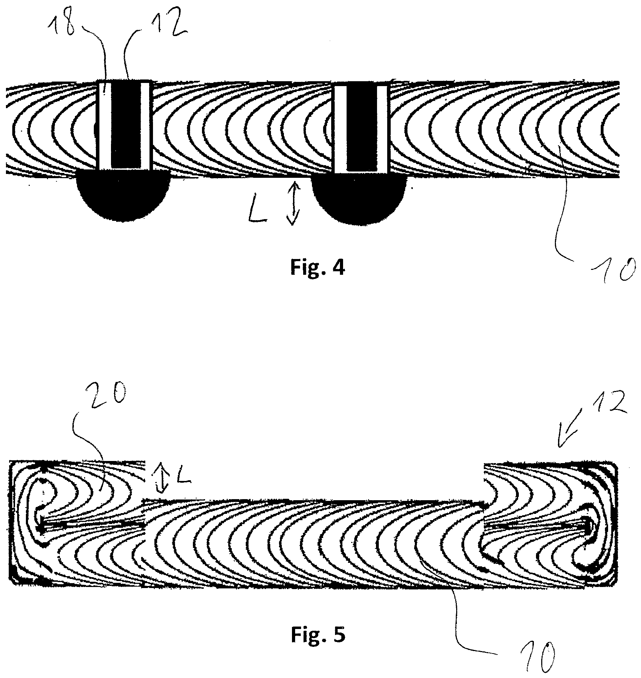

Bei der in der Fig. 4 gezeigten Ausführungsform sind die in der Dickenrichtung des Meltblown-Vliesstoffs 10 angeordneten Abstandshalter 12 aus einem anderen als Vliesstoff bestehenden Material, nämlich aus Kunststoff geformte pilzförmige Elemente 12. Dabei erstrecken sich die Abstandshalter durch eine zuvor druckfrei in den Vliesstoff 10 eingebrachte Aussparung 18 und ragen in diesem Beispiel in der Dickenrichtung gesehen um die Entfernung L über die Unterseite des Vliesstoffs 10 hinaus.

Bei der in der Fig. 5 gezeigten Ausführungsform ist als Abstandshalter am linken Rand und am rechten Rand des Meltblown-Vliesstoffs 10 zusätzlicher Vliesstoff 20 auf dem Meltblown-Vliesstoff 10 aufgebracht, so dass die Gesamtdicke in diesen Bereichen des Meltblown-Vliesstoffs 10 größer als die des übrigen Vliesstoffs ist. Dabei wurde der zusätzliche Vliesstoff 20 an beiden Rändern durch Umklappen des Meltblown-Vliesstoffs 10 aufgebracht, komprimiert und durch Klebstoff fixiert.

Indem in dem Meltblown-Vliesstoff 10 Abstandshalter 12 vorgesehen sind, welche i) auf der Oberseite und/oder Unterseite des Vliesstoffs 10 angeordnet sind oder ii) sich zumindest teilweise durch den Vliesstoffs 10 erstrecken und in der Dickenrichtung gesehen über die Oberseite und/oder die Unterseite des Vliesstoffs 10 bis um die Länge L hinausragen können, können verschiedene Lagen des Meltblown-Vliesstoffs 10 einfach übereinander gestapelt werden, ohne dass dadurch eine Verformung und insbesondere Kompression des Meltblown-Vliesstoffs 10 auftritt, da sich die verschiedenen Lagen jeweils mit ihren Abstandshalter 12 berühren und durch diese gegenseitig so beabstandet werden, dass die oberen Lagen durch ihr Gewicht nicht die unteren Lagen komprimieren. Dadurch wird eine einfache Lagerbarkeit des Meltblown-Vliesstoffs 10 erreicht.

### Bezugszeichenliste

- 10: Meltblown-Vliesstoff
- 12: Abstandshalter
- 14: Vertiefungen
- 16: komprimierter Vliesstoff
- 18: Aussparung
- 20: zusätzlicher Vliesstoff

- L: Entfernung, um die die durch komprimierten Vliesstoff begrenzte Unterseite der Vertiefung in der Dickenrichtung gesehen über die Unterseite des Vliesstoffs hinausragt.

## Patentansprüche

1. Meltblown-Vliesstoff (10) in Form eines flächigen Gebildes, in dem wenigstens ein in Dickenrichtung des Meltblown-Vliesstoffs (10) angeordneter Abstandshalter (12) vorgesehen ist, welcher i) auf der Oberseite und/oder Unterseite des Vliesstoffs (10) angeordnet ist oder ii) sich zumindest teilweise durch den Vliesstoffs (10) erstreckt und in der Dickenrichtung gesehen zumindest ein Maß aufweist, dass die unerwünschte Dickenminderung des Meltblown-Vliesstoffs (10) bei Druckbeaufschlagung verhindert oder 90% bis 100% der Dicke des Meltblown-Vliesstoffs (10) aufweist oder über die Oberseite und/oder die Unterseite des Vliesstoffs (10) hinausragt.

2. Meltblown-Vliesstoff nach Anspruch 1,
**dadurch gekennzeichnet, dass**
der wenigstens eine Abstandshalter (12) eine durch Aufbringen von mechanischem Druck erzeugte Vertiefung (14) ist, deren Seitenflächen und Unterseite durch komprimierten Vliesstoff (16) begrenzt wird, wobei die durch komprimierten Vliesstoff (16) begrenzte Unterseite der Vertiefung (14) in der Dickenrichtung gesehen zwischen 0% und bis zu 10% der Dickes des Meltblown-Vliesstoffs (10) unterhalb der Unterseite des Meltblown-Vliesstoffs (10) liegt oder über die Unterseite des Meltblown-Vliesstoffs (10) hinausragt.

3. Meltblown-Vliesstoff nach Anspruch 2,
**dadurch gekennzeichnet, dass**
die Vertiefung (14) eine quaderförmige oder zylindrische Querschnittsform aufweist.

4. Meltblown-Vliesstoff nach Anspruch 2 oder 3,
**dadurch gekennzeichnet, dass**
die Vertiefung (14) eine Breite von dem 0,1-fachen bis 5-fachen, bevorzugt von dem 0,25-fachen bis 2-fachen und besonders bevorzugt von dem 0,3-fachen bis 0,7-fachen der Dicke des Vliesstoffs (10) aufweist.

5. Meltblown-Vliesstoff nach einem der Ansprüche 2 bis 4,
**dadurch gekennzeichnet, dass**
dieser eine Vielzahl von Vertiefungen (14) aufweist, die voneinander einen in der Vliesstoffebene gesehenen Abstand von 50 bis 500 mm, bevorzugt von 100 bis 300 mm und besonders bevorzugt von 150 bis 250 mm aufweisen.

6. Meltblown-Vliesstoff nach zumindest einem der vorstehenden Ansprüche, **dadurch gekennzeichnet, dass**
der wenigstens eine Abstandshalter (12) ein aus einem anderen als Vliesstoff bestehenden Material geformtes Element ist, wobei das Element vorzugsweise aus einem aus der aus Metallen, Kunststoffen, Keramiken, Holz, Glas und beliebigen Kombinationen von zwei oder mehr der vorgenannten Materialien bestehenden Gruppe ausgewähltes Material ist und das Element besonders bevorzugt aus einem chemisch dem Vliesstoff verwandten oder kompatiblen Rohstoff besteht, so dass ein stoffliches Recycling des Vliesstoffs einschließlich der Abstandshalter möglich ist.

7. Meltblown-Vliesstoff nach Anspruch 6,
**dadurch gekennzeichnet, dass**
der wenigstens eine Abstandshalter (12) auf die Oberseite und/oder Unterseite des Vliesstoffs (10) aufgebracht und vorzugsweise mit Klebstoff, mit einem Verbindungselement, durch thermisches Verschweißen oder durch mechanisches Pressen fixiert ist.

8. Meltblown-Vliesstoff nach Anspruch 6 oder 7,
**dadurch gekennzeichnet, dass**
der wenigstens eine Abstandshalter (12) sich durch eine zuvor druckfrei in den Vliesstoff (10) eingebrachte Aussparung (18) erstreckt und in der Dickenrichtung gesehen zumindest ein Maß aufweist, dass die unerwünschte Dickenminderung des Meltblown-Vliesstoffs (10) bei Druckbeaufschlagung verhindert oder 90% bis 100% der Dicke des Meltblown-Vliesstoffs (10) aufweist oder über die Oberseite und/oder die Unterseite des Vliesstoffs (10) hinausragt, wobei der wenigstens eine Abstandshalter (12) vorzugsweise eine zylindrische, quaderförmige oder pilzförmige Form aufweist.

9. Meltblown-Vliesstoff nach einem der Ansprüche 6 bis 8,
**dadurch gekennzeichnet, dass**
dieser eine Vielzahl von Abstandshalter (12) aufweist, die voneinander einen in der Vliesstoffebene gesehenen Abstand von 50 bis 500 mm, bevorzugt von 100 bis 300 mm und besonders bevorzugt von 150 bis 250 mm aufweisen.

10. Meltblown-Vliesstoff nach zumindest einem der vorstehenden Ansprüche, **dadurch gekennzeichnet, dass**
als Abstandshalter (12) bereichsweise zusätzlicher Vliesstoff (20) auf den Vliesstoff (10) aufgebracht ist, so dass die Gesamtdicke in diesem/diesen Bereich(en) größer als die des übrigen Vliesstoffs (10) ist.

11. Meltblown-Vliesstoff nach Anspruch 10,
**dadurch gekennzeichnet, dass**
der zusätzliche Vliesstoff (20) auf dem Vliesstoff (10) durch Klebstoff, thermisches Verschweißen oder mechanisches Pressen fixiert ist.

12. Meltblown-Vliesstoff nach Anspruch 10 oder 11,
**dadurch gekennzeichnet, dass**
der zusätzliche Vliesstoff (20) als Abstandshalter (12) auf zumindest einen Teil des Randbereichs des Vliesstoffs (10) aufgebracht ist, so dass die Gesamtdicke in diesem Randbereich größer als die des übrigen Vliesstoffs (10) ist.

13. Meltblown-Vliesstoff nach Anspruch 12,
**dadurch gekennzeichnet, dass**
der zusätzliche Vliesstoff (20) durch Umklappen des Meltblown-Vliesstoffs (10) auf zumindest einen Teil des Randbereichs des Meltblown-Vliesstoffs (10) aufgebracht und durch Klebstoff, thermisches Verschweißen oder mechanisches Pressen auf dem Randbereich des Meltblown-Vliesstoffs (10) fixiert ist.

14. Meltblown-Vliesstoff nach zumindest einem der vorstehenden Ansprüche, **dadurch gekennzeichnet, dass**
der Meltblown-Vliesstoff (10) ein Flächengewicht von 30 bis 600 g/m², bevorzugt von 100 bis 400 g/m² und besonders bevorzugt von 250 bis 350 g/m² aufweist.

15. Meltblown-Vliesstoff nach zumindest einem der vorstehenden Ansprüche, **dadurch gekennzeichnet, dass**
der Meltblown-Vliesstoff (10) ein voluminöser Meltblown-Vliesstoff (10) mit einer Dichte von 5 bis 50 kg/m³, bevorzugt von 8 bis 25 kg/m³ und besonders bevorzugt von 10 bis 20 kg/m³ ist.
